# EUROPÄISCHE PATENTSCHRIFT

(11) **EP 1 006 427 B1**
(45) Veröffentlichungstag und Bekanntmachung des Hinweises auf die Patenterteilung: **23.01.2008**
(21) Anmeldenummer: 99123561.5
(22) Anmeldetag: 26.11.1999
(51) Int. Cl.: G06F 1/32

(54) **Mikrokontroller mit einer Überwachungseinrichtung zum Einstellen eines aktiven und eines inaktiven Betriebszustandes**
Microcontroller with a monitoring device for setting an active and an inactive operating state
Microcontrôleur avec un dispositif de surveillance pour régler des états actifs et inactifs

(30) Priorität: 01.12.1998 DE 19855371; 26.11.1999 DE 19956923
(43) Veröffentlichungstag der Anmeldung: 07.06.2000
(73) Patentinhaber: ROBERT BOSCH GMBH, 70442 Stuttgart (DE)
(72) Erfinder: Grimm, Andreas, 76316 Malsch (DE)

(56) Entgegenhaltungen:
- US-A- 4 812 677
- US-A- 5 324 992

## Beschreibung

### Stand der Technik

Die Erfindung betrifft eine Überwachungseinrichtung für einen Mikrokontroller zum Einstellen eines aktiven und eines Versorgungsenergie sparenden inaktiven Betriebszustandes, wobei der aktive Betriebszustand des Mikrokontroller nur unter Berücksichtigung von Ausgangssignalen zugeordneter, zu steuernder Funktionseinheiten nur für die Laufzeit eines entsprechend angepassten Steuerprogramms aufrecht erhalten wird.

Eine derartige Überwachungseinrichtung für einen Mikrokontroller ist aus der DE 43 02 232 A1 bekannt und wird insbesondere in elektrischen Verstellantrieben als Funktionseinheiten eingesetzt. Dabei ist die Aktiv-Überwachungseinrichtung als Weckschaltung ausgebildet, die in periodischen Zeitabständen den Mikrokontroller vom inaktiven in den aktiven Betriebszustand einstellt. Dabei werden diese Zeitabstände durch einen niederfrequenten Oszillator festgelegt, während für die wesentlich höhere Taktfrequenz des Mikrokontroller ein Phasenregelkreis vorgesehen ist, der aus der niedrigen Frequenz die höhere Frequenz generiert. Der Mikrokontroller benötigt daher nur in dem aktiven Betriebszustand Energie, während die Weckschaltung und der niederfrequente Oszillator dauernd im aktiven Betriebszustand Energie verbrauchen. Darüber hinaus ist der Mikrokontroller mit dieser Überwachungseinrichtung nicht auf eventuell auftretende Fehler im Zusammenspiel zwischen Funktionseinheiten und Weckschaltung mit Oszillator und Phasenregelkreis überwacht.

Eine weitere Überwachungseinrichtung für einen Mikrokontrollers zum Einstellen eines aktiven und eines inaktiven Betriebszustandes ist in der US-A 4,812,677 angegeben. Bei dieser Vorrichtung wird eine Schaltungsanordnung auf ein externes Aufweck-Signal hin aktiv, um eine fehlersichere Batterie schonende Steuerung einer Energieversorgung zu gewährleisten. Die Schaltungsanordnung umfasst die Energieversorgung, eines Mikrocomputers, der auf das externe Aufweck-Signal zum Bereitstellen einer Angabe zum Stillsetzen anspricht, um anzugeben, wenn die Energieversorgung außer Betrieb gesetzt werden soll, und eine Energieversorgungssteuerung, die auf das externe Aufweck-Signal und die Angabe zum Stillsetzen anspricht, um die Inaktivierung der Energieversorgung zu steuern. Die Steuerung erklärt die Angabe zum Stillsetzen für gültig, indem sie diese mit dem Status des Aufweck-Signals vergleicht, um die fehlersichere Energieversorgungssteuerung zu gewährleisten.

Es ist Aufgabe der Erfindung, eine Überwachungseinrichtung für einen Mikrokontroller der eingangs erwähnten Art so zu verbessern, dass Fehler im Zusammenspiel von Mikrocontroller, Funktionseinheiten und Überwachungseinrichtung erkannt werden können und dass der Energiebedarf im inaktiven Betriebszustand des Mikrokontrollers noch weiter reduziert werden kann.

Diese Aufgabe wird nach der Erfindung dadurch gelöst, dass dem Mikrokontroller eine Aktiv-Überwachungsschaltung und eine Betriebsstrom-Überwachungsschaltung zugeordnet sind, dass im Ruhezustand Mikrokontroller und Aktiv-Überwachungsschaltung im energiesparenden inaktiven Betriebszustand eingestellt sind, dass der Aktiv-Überwachungsschaltung neben Aktiv-Anforderungssignalen der Funktionseinheiten im aktiven Betriebszustand des Mikrokontrollers von der Betriebsstrom-Überwachungsschaltung ein Betriebsstrom-Sign al zuführbar ist, wobei die Betriebsstrom-Überwachungsschattung den Betriebsstrom der den Mikrokontroller enthaltenden elektronischen Schaltung mit einem den aktiven Zustand dieser elektronischen Schaltung kennzeichnenden Stromschwellwert vergleicht und beim Überschreiten dieses Schwellwertes ein Betriebsstrom-Signal an die Aktiv-Überwachungsschaltung übermittelt, dass durch das Auftreten mindestens eines Aktiv-Anforderungssignals oder des Betriebsstrom-Signals die Aktiv-Überwachungsschaltung in den aktiven Betriebszustand übergeht und an den Mikrokontroller ein Einschaltsignal zum Einstellen des aktiven Betriebszustandes überträgt, dass der aktive Mikrokontroller die Ausgangssignale der Funktionseinheiten abfragt und bei Bedarf ein entsprechendes Steuerprogramm durchführt und erst dann wieder in den inaktiven Betriebszustand zurückkehrt, wenn er festgestellt hat, dass entweder kein Bedarf an einer Abarbeitung eines Steuerprogramms besteht oder wenn er die Abarbeitung aller benötigten Steuerprogramme beendet hat, dass der Mikrokontroller seinen Betriebszustand an die Aktiv-Überwachungsschaltung zurückmeldet und dass die Aktiv-Überwachungsschaltung, nachdem sie vom Mikrokontroller die Rückmeldung über dessen Übergang in den inaktiven Betriebszustand empfangen hat, nur dann selbst auch in den inaktiven Betriebszustand übergeht, wenn sie von der Betriebsstrom-Überwachungsschaltung kein Betriebsstromsignal mehr erhält, sonst aber ein Störungssignal abgibt.

Bei dieser Überwachungseinrichtung sind in der Ausgangsstellung Mikrokontroller und Aktiv-Überwachungsschaltung im inaktiven Betriebszustand = energiesparenden Wartezustand. Die Einleitung des aktiven Betriebszustandes mit höherem Energiebedarf geht von den Funktionseinheiten aus und zwar in Form eines Aktiv-Anforderungssignals, das der Aktiv-Überwachungsschaltung zugeführt wird. Daraufhin wird über ein Einschaltsignal der Aktiv-Überwachungsschaltung der Mikrokontroller in den aktiven Betriebszustand versetzt, der dann unter Abfrage der Funktionseinheiten das eventuell erforderliche Steuerprogramm durchführt und dies der Aktiv-Überwachungseinrichtung mitteilt. Ist dies geschehen oder ist kein Steuerprogramm durchzuführen, dann geht der Mikrokontroller in den inaktiven Betriebszustand zurück. Sobald die Aktiv-Überwachungsschaltung darüber informiert ist, nimmt auch die Aktiv-Überwachungsschaltung wieder den inaktiven Betriebszustand vor. Dieses Zusammenspiel von Aktiv-Überwachungsschaltung, Funktionseinheiten und Mikrokontroller hat den Vorteil, dass in den inaktiven Zeiten des Mikrokontroller auch die Aktiv-Überwachungsschaltung den inaktiven Betriebszustand annehmen kann und nur im Wartezustand auf das Auftreten eines Aktiv-Anforderungssignals der Funktionseinheiten ausgelegt sein muss. Dies kann jedoch mit minimalem Energieaufwand erreicht werden.

Die zusätzliche Überwachung des Betriebsstromes führt zu einer höheren Sicherheit der gesamten Anordnung, denn bei inaktivem Betriebszustand des Mikrokontrollers und Auftreten eines höheren Betriebsstromes liegt ein Fehler in der Anordnung vor und die Aktiv-Überwachungsschaltung kann daraus ein Störsignal ableiten, das eventuell auch zur gesamten Abschaltung der Anordnung verwendet werden kann.

Zur Ableitung des Betriebsstromsignals ist nach einer Ausgestaltung vorgesehen, dass die Betriebsstrom-Überwachungsschaltung die Stromaufnahme des Mikrokontrollers erfasst und beim Überschreiten eines dem inaktiven Betriebszustandes entsprechenden Betriebsstromes ein Betriebsstromsignal an die Aktiv-Überwachungsschaltung zur Einleitung des aktiven Betriebszustandes mit Abgabe des Einschaltsignals für den Mikrokontroller weiterleitet.

Die Ableitung des Betriebsstromsignals kann jedoch auch so variiert werden, dass die Betriebsstrom-Überwachungsschaltung als Schwellwertschaltung ausgebildet ist, die den Spannungsabfall an einem Messwiderstand in der Versorgungsspannungs-Zuleitung erfasst und beim Überschreiten des im inaktiven Betriebszustand vom Mikrokontroller oder der gesamten Anordnung aufgenommenen Stromes das Betriebsstrom-Signal an die Aktiv-Überwachungsschaltung weiterleitet.

In jedem Fall ist sichergestellt, dass ohne Beeinflussung der Änderung des Betriebszustandes von Mikrokontroller und Aktiv-Überwachungsschaltung bei fehlerhafter Anordnung die Aktiv-Überwachungsschaltung das Störsignal ableiten kann.

Die Rückschaltung der Aktiv-Überwachungsschaltung in den inaktiven Betriebszustand = Wartezustand für ein Aktiv-Anforderungssignal der Funktionseinheiten erfolgt am einfachsten dadurch, dass die Aktiv-Überwachungsschaltung verzögert in den inaktiven Betriebszustand zurückkehrt, wenn der Mikrokontroller den inaktiven Betriebszustand an die Aktiv-Überwachungsschaltung zurückmeldet. Dann ist gewährleistet, dass ein Zwangsablauf im Wechselspiel zwischen Mikrokontroller und Aktiv-Überwachungsschaltung eingehalten wird.

Die Sicherheit der Anordnung kann dadurch erhöht werden, dass die Aktiv-Überwachungsschaltung über ein Sondersignal den Mikrokontroller zur erneuten Durchführung des Steuerprogrammes veranlasst, und dass der Mikrokontroller über getrennte Steuerleitungen die unterschiedlichen Betriebszustandssignale an die Aktiv-Überwachungsschaltung überträgt. Die Aktiv-Überwachungsschaltung kann dann bei nicht ordnungsgemäßer Rückmeldung des aktiven Betriebszustandes des Mikrokontrollers die erneute Einleitung des erforderlichen Steuerprogrammes bewirken, wobei das Sondersignal auch auf einer getrennten Steuerleitung von der Aktiv-Überwachungsschaltung zum Mikrokontroller übertragen werden kann.

Die Erfindung wird anhand eines als Blockschaltbild dargestellten Ausführungsbeispiels näher erläutert.

Der im Blockschaltbild gezeigte Mikrokontroller 10 ist eine programmgesteuerte signalverarbeitende Anordnung, die einen Programmspeicher enthält und in bekannter Weise aufgebaut und ausgelegt werden kann.

Wie die Anschlüsse 16 und 17 des Mikrokontrollers 10 andeuten, stehen die Funktionseinheiten 40 mit ihren Anschlüssen 41 und 42 über Eingangs- und Ausgangssteuerleitungen miteinander in Verbindung, so dass der Mikrokontroller 10 den Zustand der Funktionseinheiten 40 abfragen und ändern kann. Auch dieses Wechselspiel unter Steuerung des Mikrokontrollers 10 ist in bekannter Weise durchführbar.

Dem Mikrokontroller 10 ist eine Aktiv-Überwachungsschaltung 20 zugeordnet, der von den Funktionseinheiten 40 Aktiv-Anforderungssignale über die Anschlüsse 43 und 27 zuführbar sind, da im Ausgangszustand Mikrokontroller 10 und Aktiv-Überwachungsschaltung 20 im inaktiven, energiesparenden Betriebszustand = Wartezustand eingestellt sind. Wird von der Aktiv-Überwachungsschaltung 20 ein Aktiv-Anforderungssignal erkannt, dann nimmt sie den aktiven Betriebszustand ein und veranlasst über ein Einschaltsignal auf der Steuerleitung vom Anschluss 24 zum Anschluss 14 die Einstellung des aktiven Betriebszustandes des Mikrokontrollers 10, der daraufhin den Zustand der Funktionseinheiten 40 auf den Anschlüssen 16 abfrägt und entscheidet, ob ein Steuerprogramm durchzuführen ist oder nicht. Diese Entscheidung wird über getrennte Steuerleitungen an den Anschlüssen 12 und 15 der Aktiv-Überwachungsschaltung 20 mitgeteilt. So kann z.B. auf der Steuerleitung 12-22 der aktive Betriebszustand in Form des ablaufenden Steuerprogrammes übertragen werden, während auf der Steuerleitung 15-25 die Rückkehr des Mikrokontrollers 10 in den inaktiven Betriebszustand der Aktiv-Überwachungsschaltung 20 zur Kenntnis gebracht wird. Damit lässt sich bei ordnungsgemäß abgelaufenem Wechselspiel zwischen Mikrokontroller 10 und Aktiv-Überwachungsschaltung 20 auch diese wieder in den inaktiven Betriebszustand zurückstehen. Dies setzt jedoch voraus, dass am Betriebsstrom der Anordnung oder des Mikrokontrollers 10 erkannt wird, dass die gesamte Anordnung oder der Mikrokontroller 10 sich tatsächlich im inaktiven Betriebszustand befinden. Dazu ist eine Betriebsstrom-Überwachungsschaltung 30 vorgesehen, die vorzugsweise als Schwellwertschaltung ausgebildet ist und den Spannungsabfall an einem Messwiderstand R in der Versorgungsspannungs-Zuleitung erfasst. Dieser Schwellwert ergibt sich aus dem inaktiven Betriebszustand. Wird dieser Schwellwert aufgrund von Fehlern im Zusammenspiel von Mikrokontroller 10, Funktionseinheiten 40 und Aktiv-Überwachungsschaltung 20 oder in diesen Einheiten selbst überschritten, dann erhält die Aktiv-Überwachungsschaltung 20 ein Betriebsstromsignal vom Ausgang 31 am Anschluss 21, das auch nach dem Zurückkehren des Mikrokontrollers 10 in den inaktiven Betriebszustand noch an der Aktiv-Überwachungsschaltung 20 ansteht und eine Rückschaltung derselben in den inaktiven Betriebszustand verhindern kann. Die Rückschaltung der Aktiv-Überwachungsschaltung 20 in den inaktiven Betriebszustand wird durch ein Zeitglied in der Aktiv-Überwachungsschaltung 20 verzögert, damit noch überprüft werden kann, ob nach Rückkehr des Mikrokontrollers 10 in den inaktiven Betriebszustand die Betriebsstrom-Überwachung 30 noch angesprochen hat oder anspricht und auf einen fehlerhaften Zustand der Anordnung hinweist, was dann von der Aktiv-Überwachungsschaltung 20 zur Abgabe eines Störsignals 26 ausgewertet werden kann. Dieses Störsignal 26 kann zur optischen und/oder akustischen Alarmgabe und/oder zur Abschaltung der Anordnung verwendet werden. Dies gilt auch, wenn die Betriebsstrom-Überwachung 30 die Aktiv-Überwachungsschaltung 20 in den aktiven Betriebszustand setzt und der aktive Betriebszustand des Mikrokontrollers 10 keine echte Anforderung feststellt.

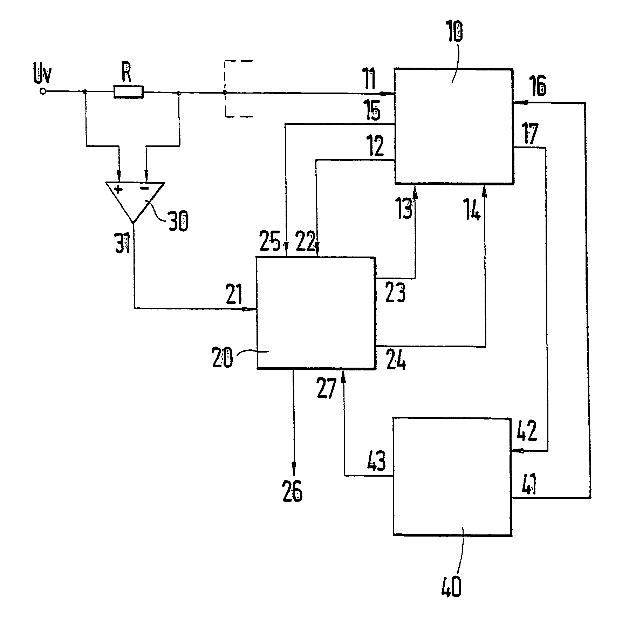

## Patentansprüche

1. Überwachungseinrichtung für einen Mikrokontroller zum Einstellen eines aktiven und eines Versorgungsenergie sparenden inaktiven Betriebszustandes, wobei der aktive Betriebszustand des Mikrokontroller unter Berücksichtigung von Ausgangssignalen zugeordneter, zu steuernder Funktionseinheiten nur für die Laufzeit eines entsprechend angepassten Steuerprogramms aufrecht erhalten wird,
**dadurch gekennzeichnet,**
**dass** dem Mikrokontroller (10) eine Aktiv-Überwachungsschaltung (20) und eine Betriebsstrom-Überwachungsschaltung (30) zugeordnet sind,
**dass** im Ruhezustand Mikrokontroller (10) und Aktiv-Überwachungsschaltung (20) im energiesparenden inaktiven Betriebszustand eingestellt sind,
**dass** der Aktiv-Überwachungsschaltung (20) neben Aktiv-Anforderungssignalen (43-27) der Funktionseinheiten (40) im aktiven Betriebszustand des Mikrokontroller (10) von der Betriebsstrom-Überwachungsschaltung (30) ein Betriebsstrom-Signal (31-21) zuführbar ist, wobei die Betriebsstrom-Überwachungsschaltung den Betriebsstrom der den Mikrokontroller enthaltenden elektronischen Schaltung mit einem den aktiven Zustand dieser elektronischen Schaltung kennzeichnenden Stromschwellwert vergleicht und beim Überschreiten dieses Schwellwertes ein Betriebsstrom-Signal an die Aktiv-Überwachungsschaltung übermittelt,
**dass** durch das Auftreten mindestens eines Aktiv-Anforderungssignals (43-27) oder des Betriebsstrom-Signals (31-21) die Aktiv-Überwachungsschaltung (20) in den aktiven Betriebszustand übergeht und an den Mikrokontroller (10) ein Einschaltsignal (23-13) zum Einstellen des aktiven Betriebszustandes überträgt,
**dass** der aktive Mikrokontroller (10) die Ausgangssignale (41-16) der Funktionseinheiten (40) abfragt und bei Bedarf ein entsprechendes Steuerprogramm durchführt und erst dann wieder in den inaktiven Betriebszustand zurückkehrt, wenn er festgestellt hat, dass entweder kein Bedarf an einer Abarbeitung eines Steuerprogramms besteht oder wenn er die Abarbeitung aller benötigten Steuerprogramme beendet hat,
**dass** der Mikrokontroller (10) seinen Betriebszustand an die Aktiv-Überwachungsschaltung (20) zurückmeldet (12-22; 15-25) und
**dass** die Aktiv-Überwachungsschaltung (20), nachdem sie vom Mikrokontroller die Rückmeldung über dessen Übergang in den inaktiven Betriebszustand empfangen hat, nur dann selbst auch in den inaktiven Betriebszustand übergeht, wenn sie von der Betriebsstrom-Überwachungsschaltung (30) kein Betriebsstromsignal (31-21) mehr erhält, sonst aber ein Störungssignal (26) abgibt.

2. Überwachungseinrichtung nach Anspruch 1,
**dadurch gekennzeichnet, dass** die Betriebsstrom-Überwachungsschaltung (30) die Stromaufnahme des Mikrokontroller (10) erfasst und beim Überschreiten eines dem inaktiven Betriebszustandes entsprechenden Betriebsstromes ein Betriebsstromsignal (31-21) an die Aktiv-Überwachungsschaltung (20) zur Einleitung des aktiven Betriebszustandes mit Abgabe des Einschaltsignals (23-13) für den Mikrokontroller (10) weiterleitet.

3. Überwachungseinrichtung nach Anspruch 1 oder 2,
**dadurch gekennzeichnet, dass** die Betriebsstrom-Überwachungsschaltung (30) als Schwellwertschaltung ausgebildet ist, die den Spannungsabfall an einem Messwiderstand (B) in der Versorgungsspannungs-Zuleitung erfasst und beim Überschreiten des im inaktiven Betriebszustand vom Mikrokontroller (10) oder der gesamten Anordnung aufgenommenen Stromes das Betriebsstrom-Signal (31-21) an die Aktiv-Überwachungsschaltung (20) weiterleitet.

4. Überwachungseinrichtung nach einem der Ansprüche 1 bis 3,
**dadurch gekennzeichnet, dass** die Aktiv-Überwachungsschaltung (20) verzögert in den inaktiven Betriebszustand zurückkehrt, wenn der Mikrokontroller (10) den inaktiven Betriebszustand an die Aktiv-Überwachungsschaltung (20) zurückmeldet.

5. Überwachungseinrichtung nach einem der Ansprüche 1 bis 4,
**dadurch gekennzeichnet, dass** die Aktiv-Überwachungsschaltung (20) über ein Sondersignal (24-14) den Mikrokontroller (10) zur erneuten Durchführung des Steuerprogrammes veranlasst.

6. Überwachungseinrichtung nach einem der Ansprüche 1 bis 5,
**dadurch gekennzeichnet, dass** der Mikrokontroller (10) über getrennte Steuerleitungen die unterschiedlichen Betriebszustandssignale (12-22; 15-25) an die Aktiv-Überwachungsschaltung (20) überträgt.

## Claims

1. Monitoring device for a microcontroller for selecting an active operating state and an inactive operating state which saves supply energy, with the active operating state of the microcontroller being maintained taking account of output signals from associated functional units to be controlled only for the delay time of a correspondingly matched control program,
**characterized**
**in that** the microcontroller (10) has an associated active monitoring circuit (20) and an associated operating-current monitoring circuit (30),
**in that**, in the rest state, the microcontroller (10) and the active monitoring circuit (20) are set in the energy-saving inactive operating state,
**in that** the active monitoring circuit (20) can be supplied with an operating-current signal (31-21) from the operating-current monitoring circuit (30), in addition to active request signals (43-27) from the functional units (40), when the microcontroller (10) is in the active operating state, with the operating-current monitoring circuit comparing the operating current of the electronic circuit which contains the microcontroller with a current threshold value which identifies the active state of this electronic circuit, and transmitting an operating-current signal to the active monitoring circuit if this threshold value is exceeded,
**in that**, as a result of the occurrence of at least one active request signal (43-27) or of the operating-current signal (31-21), the active monitoring circuit (20) changes to the active operating state, and transmits to the microcontroller (10) a switch-on signal (23-13) in order to select the active operating state,
**in that** the active microcontroller (10) checks the output signals (41-16) from the functional units (40) and, if required, runs an appropriate control program, and returns to the inactive operating state only if it once again finds that there is either no need to process a control program or the processing of all of the required control programs has been completed,
**in that** the microcontroller (10) signals (12-22; 15-25) its operating state back to the active monitoring circuit (20), and
**in that**, once the active monitoring circuit (20) has received the signal back from the microcontroller that it has changed to the inactive operating state, itself changes to the inactive operating state only if it is no longer receiving any operating-current signal (31-21) from the operating-current monitoring circuit (30), but otherwise emits a fault signal (26).

2. Monitoring device according to Claim 1,
**characterized in that** the operating-current monitoring circuit (30) detects a current drawn by the microcontroller (10) and, if an operating current which corresponds to the inactive operating state is exceeded, passes an operating-current signal (31-21) to the active monitoring circuit (20) in order to initiate the active operating state, with the switch-on signal (23-13) being emitted for the microcontroller (10).

3. Monitoring device according to Claim 1 or 2,
**characterized in that** the operating-current monitoring circuit (30) is designed as a threshold value circuit, which detects the voltage drop across a measurement resistor (B) in the supply-voltage supply line, and passes the operating-current signal (31-21) to the active monitoring circuit (20) if the current drawn by the microcontroller (10) or by the entire arrangement in the inactive operating state is exceeded.

4. Monitoring device according to one of Claims 1 to 3,
**characterized in that** the active monitoring circuit (20) returns to the inactive operating state with a delay if the microcontroller (10) signals back the inactive operating state to the active monitoring circuit (20).

5. Monitoring device according to one of Claims 1 to 4,
**characterized in that** the active monitoring circuit (20) causes the microcontroller (10) to run the control program again by means of a special signal (24-14).

6. Monitoring device according to one of Claims 1 to 5,
**characterized in that** the microcontroller (10) transmits the various operating state signals (12-22; 15-25) to the active monitoring circuit (20) via separate control lines.

## Revendications

1. Dispositif de surveillance d'un microcontrôleur, pour régler un état de fonctionnement actif et un état de fonctionnement inactif économisant de l'énergie d'alimentation, l'état de fonctionnement actif du microcontrôleur étant maintenu, en prenant en compte des signaux de sortie d'unités fonctionnelles associées à commander, uniquement pendant la durée d'un programme de commande adapté en conséquence,
**caractérisé en ce qu'**
au microcontrôleur (10) sont associés un circuit de surveillance actif (20) et un circuit de surveillance du courant de fonctionnement (30),
dans l'état de repos, le microcontrôleur (10) et le circuit de surveillance actif (20) sont réglés dans l'état de fonctionnement inactif économisant de l'énergie,
le circuit de surveillance actif (20) peut recevoir, outre des signaux de requête actifs (43-27) provenant des unités fonctionnelles (40), dans l'état de fonctionnement actif du microcontrôleur (10), un signal de courant de fonctionnement (31-21) provenant du circuit de surveillance du courant de fonctionnement (30), le circuit de surveillance du courant de fonctionnement comparant le courant de fonctionnement du circuit électronique contenant le microcontrôleur avec une valeur de seuil de courant caractérisant l'état actif de ce circuit électronique, alors que dans le cas d'un dépassement de cette valeur de seuil, il transmet un signal de courant de fonctionnement au circuit de surveillance actif,
lors de l'apparition d'au moins un signal de requête actif (43-27) ou du signal de courant de fonctionnement (31-21), le circuit de surveillance actif (20) passe dans l'état de fonctionnement actif et transmet au microcontrôleur (10) un signal d'activation (23-13) pour régler l'état de fonctionnement actif,
le microcontrôleur actif (10) demande les signaux de sortie (41-16) des unités fonctionnelles (40) et au besoin, exécute un programme de commande correspondant, puis revient dans l'état de fonctionnement inactif uniquement lorsqu'il a déterminé qu'il n'est pas nécessaire d'exécuter de programme de commande, ou lorsqu'il a terminé l'exécution de tous les programmes de commande requis,
le microcontrôleur (10) rapporte (12-22 ; 15-25) son état de fonctionnement au circuit de surveillance actif (20), et
le circuit de surveillance actif (20), après avoir reçu du microcontrôleur le rapport sur son passage dans l'état de fonctionnement inactif, ne passe lui-même dans l'état de fonctionnement inactif que lorsqu'il ne reçoit plus aucun signal de courant de fonctionnement (31-21) du circuit de surveillance du courant de fonctionnement (30), sinon il émet un signal de défaillance (26).

2. Dispositif de surveillance selon la revendication 1,
**caractérisé en ce que**
le circuit de surveillance du courant de fonctionnement (30) enregistre la consommation de courant du microcontrôleur (10) et en cas de dépassement d'un courant de fonctionnement correspondant à l'état de fonctionnement inactif, transmet un signal de courant de fonctionnement (31-21) au circuit de surveillance actif (20) pour introduire l'état de fonctionnement actif avec émission du signal d'activation (23-13) pour le microcontrôleur (10).

3. Dispositif de surveillance selon la revendication 1 ou 2,
**caractérisé en ce que**
le circuit de surveillance du courant de fonctionnement (30) est configuré sous forme de circuit à valeur de seuil, qui enregistre la chute de tension au niveau d'une résistance de mesure (B) dans l'arrivée de la tension d'alimentation, et qui en cas de dépassement du courant consommé dans l'état de fonctionnement inactif par le microcontrôleur (10) ou l'ensemble du dispositif, transmet le signal de courant de fonctionnement (31-21) au circuit de surveillance actif (20).

4. Dispositif de surveillance selon l'une des revendications 1 à 3,
**caractérisé en ce que**
le circuit de surveillance actif (20) revient dans l'état de fonctionnement inactif avec un certain retard lorsque le microcontrôleur (10) rapporte l'état de fonctionnement inactif au circuit de surveillance actif (20).

5. Dispositif de surveillance selon l'une des revendications 1 à 4,
**caractérisé en ce que**
le circuit de surveillance actif (20) autorise le microcontrôleur (10), par un signal spécial (24-14), à exécuter une nouvelle fois le programme de commande.

6. Dispositif de surveillance selon l'une des revendications 1 à 5,
**caractérisé en ce que**
le microcontrôleur (10) transmet par des lignes de commande séparées, les différents signaux d'état de fonctionnement (12-22 ; 15-25) au circuit de surveillance actif (20).
